# DEMANDE DE BREVET EUROPEEN

(11) **EP 2 072 766 A1**
(43) Date de publication de la demande: **24.06.2009**
(21) Numéro de dépôt: 07447067.5
(22) Date de dépôt: 21.12.2007
(51) Int. Cl.: F01D 25/18, F01D 25/20

(54) **Dispositif d'alimentation en huile dans un moteur aeronautique**

(71) Demandeur: Techspace Aero S.A., 4041 Milmort (BE)
(72) Inventeur: Cornet, Albert, 4800 Verviers (BE); Raimarckers, Nicolas, 4236 Tourinne (Braives) (BE); Simeon, Bernard, 6800 Libramont (BE)
(74) Mandataire: pronovem

(57) **Abrégé**

La présente invention se rapporte à une installation pour l'alimentation en fluide utilisé à la fois comme lubrifiant et comme fluide caloporteur, de préférence de l'huile, d'au moins deux équipements (2,3) dans un moteur aéronautique, caractérisée en ce que les conduites respectives d'acheminement du fluide vers lesdits équipements (2,3) forment, au moins sur une première partie de leurs sections respectives, une conduite commune (5) qui aboutit à un ensemble-vanne de distribution (4) suivie, sur une seconde partie de leurs sections respectives, de conduites distinctes (2A,3A) alimentant individuellement et respectivement chacun desdits équipements (2,3), ledit ensemble-vanne de distribution (4) permettant d'ajuster le débit de fluide dans chacune des secondes conduites (2A,3A) en fonction des besoins desdits équipements individuels (2,3).

## Description

### Objet de l'invention

La présente invention se rapporte au domaine des systèmes d'alimentation en huile de lubrification et/ou de refroidissement dans un moteur aéronautique de dernière génération, qui permettent de consommer le moins de carburant possible tout en assurant une évacuation optimale de la chaleur générée par les enceintes et les équipements.

### Etat de la technique

Les nouvelles générations de moteurs aéronautiques tendent à fournir une solution permettant de consommer de moins en moins de carburant. La réussite de cet objectif passe par l'intégration de systèmes générant de plus en plus de chaleur (ou « calories ») de par :
- le chargement de plus en plus important des enceintes de paliers ;
- l'intégration de réducteurs de vitesse (« gearbox ») de haute puissance (turbopropulseur, « open rotor », etc.) ;
- l'intégration de nouveaux équipements (générateur-démarreur ou « starter/generator » (S/G) de haute puissance, etc.).

Les calories apportées par les différents systèmes cités ci-dessus doivent dès lors être reprises par l'huile, fluide de lubrification mais également caloporteur. Les besoins en huile sont donc nécessairement augmentés. Traditionnellement, selon l'état de la technique, les circuits d'alimentation des différents équipements à refroidir sont séparés, chacun possédant son système de circulation, généralement basé sur des pompes volumétriques et son système de refroidissement, comme un échangeur air-huile et/ou fuel-huile.

Etant donné la distinction faite entre les différents circuits, les fonctions d'alimentation sont multipliées (autant que de systèmes) augmentant ainsi la masse totale du groupe de lubrification (GdL).

Il est important de noter les besoins de certains équipements tels que les « starter-generator » (S/G), qui ne répondent pas aux exigences traditionnelles en nécessitant un refroidissement par l'huile quasi constant pour toute l'enveloppe de vol. Or, les pompes d'alimentation entraînées mécaniquement par l'AGB (« accessory gearbox ») à une vitesse proportionnelle à l'arbre du moteur Haute Pression (HP) fournissent un débit fortement variable. Les pompes d'alimentation sont en conséquence fortement surdimensionnées pour une partie importante de l'enveloppe de vol, par exemple aux hauts régimes moteur alors que le besoin en huile peut être constant, comme c'est le cas sur les S/G. La masse du groupe de lubrification est donc trop importante et une partie importante du débit doit être recirculé, générant un dégagement de chaleur.

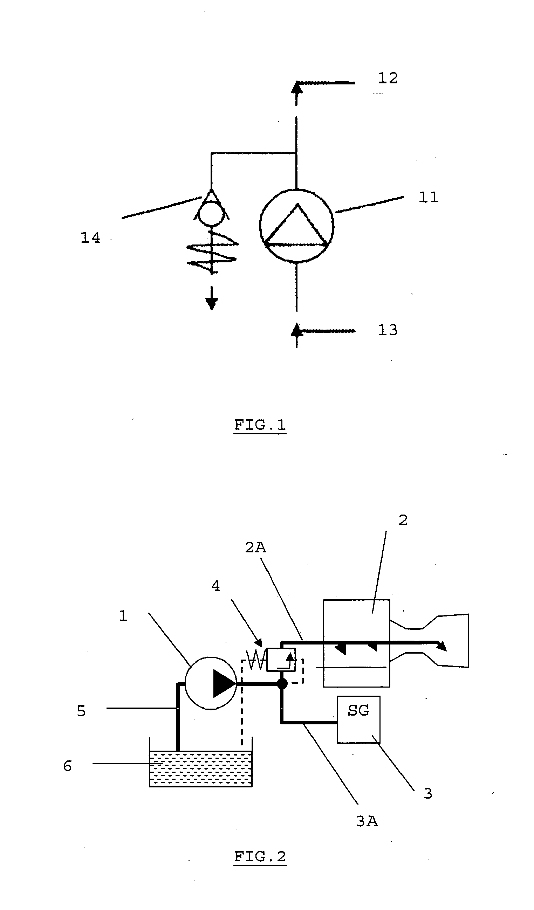

Selon l'état de la technique représenté sur la figure 1, une solution consiste à intégrer un système de dérivation ou « by-pass » 14. Celui-ci, placé en sortie 12 de la « fonction » d'alimentation 11, dévie une partie du débit vers l'entrée 13 de cette même fonction (ou vers le réservoir). La pression de l'huile qui augmente donc au passage dans la pompe doit être dégradée dans la ligne by-pass.

La dégradation de l'énergie de pression entraîne une dissipation d'énergie inutile mais incontournable selon l'état de l'art.

### Buts de l'invention

La présente invention vise à fournir un système de lubrification qui permette de s'affranchir des inconvénients de l'état de la technique.

En particulier, l'invention a pour but de réduire le nombre de pompes et donc leur masse ainsi que celle du carter et la longueur totale et la masse des canalisations, et in fine l'encombrement du groupe de lubrification.

L'invention a encore pour but de conserver une sûreté de fonctionnement du moteur acceptable.

### Principaux éléments caractéristiques de l'invention

Un premier objet de la présente invention se rapporte à une installation pour l'alimentation en fluide utilisé à la fois comme lubrifiant et comme fluide caloporteur, de préférence de l'huile, d'au moins deux équipements dans un moteur aéronautique, comprenant, pour l'alimentation de chaque équipement, un réservoir de fluide, une conduite d'acheminement du fluide de ce réservoir jusqu'audit équipement comportant au moins une pompe d'alimentation et une conduite de récupération du fluide après passage dans ledit équipement où un échange de chaleur à lieu entre ledit équipement et ledit fluide avant récupération et retour de ce fluide audit réservoir, caractérisée en ce que les conduites respectives d'acheminement du fluide vers lesdits équipements forment, au moins sur une première partie de leur section, une conduite commune qui aboutit à un ensemble-vanne de distribution suivie, sur une seconde partie de leur section, de conduites distinctes alimentant individuellement et respectivement chacun desdits équipements, ledit ensemble-vanne de distribution permettant d'ajuster le débit de fluide dans chacune des secondes conduites en fonction des besoins desdits équipements individuels.

Avantageusement, la conduite commune s'étend en amont jusqu'à un réservoir unique, qui est commun également.

Selon une forme d'exécution préférée de l'invention, l'ensemble-vanne de distribution comporte une entrée de fluide en amont venant de la pompe d'alimentation, deux sorties de fluide en aval vers les conduites respectives destinées à alimenter deux équipements, une soupape sous forme d'un clapet solidaire d'un ressort fixé à une extrémité au corps de la vanne, ladite soupape étant configurée pour être normalement fermée et obturante pour la conduite aval aboutissant au second équipement et pour s'ouvrir lorsque la pression dans la conduite aboutissant au premier équipement dépasse une valeur prédéterminée.

De préférence, ladite valeur prédéterminée de pression dépend de la raideur du ressort et l'ensemble-vanne comporte une sortie pour mettre la surface arrière de la soupape en contact avec la pression régnant dans le réservoir.

De préférence encore, la soupape est configurée pour que la surface d'appui de la pression de fluide sur la face amont de celle-ci soit plus grande lorsque la soupape est ouverte que lorsque celle-ci est fermée.

Selon une autre forme d'exécution préférée, les conduites de récupération de fluide et de retour au réservoir, après le passage dans lesdits équipements, forment également au moins en partie une conduite commune.

Plus particulièrement dans le cadre de l'invention, lesdits équipements comprennent des enceintes de paliers, des réducteurs de vitesse et des générateurs-démarreurs et de préférence au moins un desdits équipements nécessite un refroidissement par huile quasi constant sur toute l'enveloppe de vol.

Un second objet de la présente invention concerne un moteur aéronautique comprenant une installation d'alimentation en fluide lubrifiant et caloporteur possédant au moins en partie les caractéristiques précitées.

### Brève description des figures

La figure 1, déjà mentionnée, représente schématiquement une pompe d'alimentation munie d'un système de by-pass pour système de lubrification dans un moteur aéronautique, selon l'état de la technique.

La figure 2 représente schématiquement une architecture de lubrification et/ou de refroidissement (ici avec l'alimentation de deux systèmes), selon la présente invention.

La figure 3 représente schématiquement une forme d'exécution préférée de vanne de distribution d'huile selon la présente invention.

### Description d'une forme d'exécution préférée de l'invention

L'invention consiste à réaliser l'alimentation en huile de différents systèmes ou circuits de lubrification et/ou de refroidissement 2, 3 avec une seule fonction d'alimentation 1 et à réaliser la répartition du débit d'huile entre ces systèmes 2, 3 en fonction des besoins supposés indépendants de ceux-ci (figure 2).

L'invention convient particulièrement bien dans le cas où l'un des deux systèmes 2, 3 nécessite un besoin en huile relativement constant (ex. S/G) en fonction des cas de vols, ce qui conduit habituellement à un surdimensionnement d'un des deux GdL mécaniques. Le circuit commun 5, 6, 7 autorégulé grâce à une distribution par vanne 4 permet de répartir le débit en fonction des cas de vols dans les deux systèmes 2, 3, compensant ainsi le surdimensionnement des GdL séparés.

Dans le cadre de l'alimentation en huile de deux systèmes différents 2, 3, à savoir le moteur et un nouvel équipement, une seule fonction d'alimentation 7 ainsi qu'une seule canalisation 5, depuis le réservoir d'huile 6 jusqu'à la vanne de distribution 4 sont proposés. Il suffit donc de distribuer le débit en fonction des besoins des deux systèmes.

Outre la fonction d'alimentation commune, les fonctions de récupération de l'huile après passage dans les enceintes et l'ensemble des systèmes à refroidir (*gearboxes,* S/G,...) peuvent être regroupées, selon une forme d'exécution préférée, en une seule fonction, mise en oeuvre selon la disposition des systèmes sur le moteur, réduisant ainsi la masse et l'encombrement (non représenté).

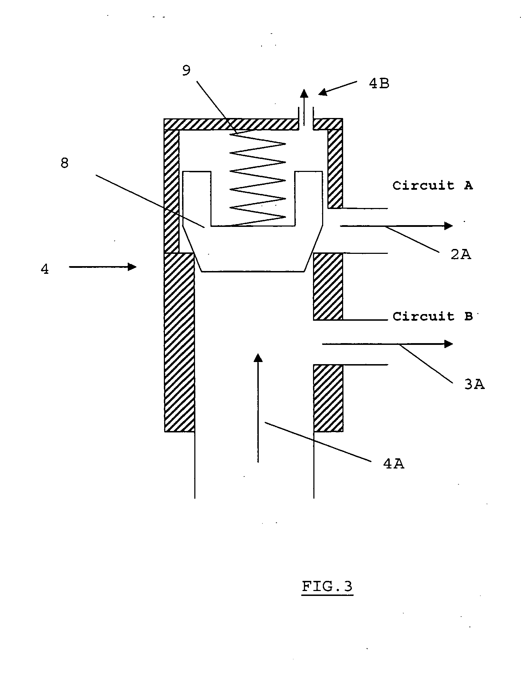

La figure 3 montre schématiquement un exemple de distributeur d'huile 4 selon une forme d'exécution préférée de la présente invention.

Le principe de cette vanne 4 est de distribuer l'huile vers l'un ou l'autre circuit 2, 3, ou vers les deux, en fonction de la pression à l'entrée du circuit B, 3A. L'ouverture de la vanne 4 est pilotée par la pression amont (pression du circuit B, 3), par la raideur du ressort 9 repoussant la soupape 8 et par la contre-pression appliquée sur la surface arrière de la soupape 8. Lorsque la soupape 8 est complètement fermée, l'ensemble du débit (aux fuites près) est fourni dans le circuit B, 3A et la contre-pression appliquée sur la soupape est composée de la pression issue du ressort 9 ainsi que de la pression régnant dans le réservoir 6, appliquée à la soupape 8 via une sortie 4B vers le réservoir 6 (≅ pression atmosphérique).

Une fois la pression limite d'ouverture atteinte, on commence à alimenter le circuit A, 2. La pression dans le circuit B, 3A va donc chuter. L'ouverture est cependant garantie par une surface d'appui de la pression d'huile plus grande que lorsque la vanne est fermée, ce qui permet d'éviter toute refermeture en fonctionnement (voir dessin de la soupape 8, figure 3).

### Avantages de l'invention

La combinaison des deux systèmes selon l'invention permet de réduire :
- le nombre de pompes, et donc la masse des pompes et celle du carter ;
- la longueur totale des canalisations, et donc leur masse, avec augmentation de la fiabilité ;
- l'encombrement sur le moteur, avec simplification du positionnement du GdL sur le moteur ;
- la génération de chaleur provoquée généralement par un système de by-pass.

La sûreté de fonctionnement de l'invention est également avantageuse puisque les seuls cas de dysfonctionnement possibles entraîneraient des répercussions sur le moteur d'avion au démarrage. De plus, l'ensemble est constitué d'éléments mécaniques simples.

La réalisation d'un seul GdL permet également de réduire le nombre d'équipements montés sur l'AGB et donc une réduction importante de la masse et de l'encombrement de celui-ci.

## Revendications

1. Installation pour l'alimentation en fluide utilisé à la fois comme lubrifiant et comme fluide caloporteur, de préférence de l'huile, d'au moins deux équipements (2, 3) dans un moteur aéronautique, comprenant, pour l'alimentation de chaque équipement (2, 3), un réservoir de fluide, une conduite d'acheminement du fluide de ce réservoir jusqu'audit équipement (2, 3) comportant au moins une pompe d'alimentation et une conduite de récupération du fluide après passage dans ledit équipement (2, 3) où un échange de chaleur à lieu entre ledit équipement (2, 3) et ledit fluide avant récupération et retour de ce fluide audit réservoir, **caractérisée en ce que** les conduites respectives d'acheminement du fluide vers lesdits équipements (2, 3) forment, au moins sur une première partie de leur section, une conduite commune (5) qui aboutit à un ensemble-vanne de distribution (4) suivi, sur une seconde partie de leurs section, de conduites distinctes (2A, 3A) alimentant individuellement et respectivement chacun desdits équipements (2, 3), ledit ensemble-vanne de distribution (4) permettant d'ajuster le débit de fluide dans chacune des secondes conduites (2A, 3A) en fonction des besoins desdits équipements individuels (2, 3).

2. Installation selon la revendication 1,
**caractérisée en ce que** la conduite commune (5) s'étend en amont jusqu'à un réservoir unique (6), qui est commun également.

3. Installation selon la revendication 1 ou 2, **caractérisée en ce que** l'ensemble-vanne de distribution (4) comporte une entrée de fluide en amont (4A) venant de la pompe d'alimentation (7), deux sorties de fluide en aval vers les conduites respectives (2A, 3A) destinées à alimenter deux équipements (2, 3), une soupape (8) sous forme d'un clapet solidaire d'un ressort (9) fixé à une extrémité au corps de la vanne, ladite soupape étant configurée pour être normalement fermée et obturante pour la conduite aval (2A) aboutissant au second équipement (2) et pour s'ouvrir lorsque la pression dans la conduite aboutissant au premier équipement (3) dépasse une valeur prédéterminée.

4. Installation selon la revendication 3,
**caractérisée en ce que** ladite valeur prédéterminée de pression dépend de la raideur du ressort (9).

5. Installation selon la revendication 3 ou 4, **caractérisée en ce qu'**elle comporte une sortie (4B) pour mettre la surface arrière de la soupape (8) en contact avec la pression régnant dans le réservoir (6).

6. Installation selon la revendication 3,
**caractérisée en ce que** la soupape (8) est configurée pour que la surface d'appui de la pression de fluide sur la face amont de celle-ci soit plus grande lorsque la soupape (8) est ouverte que lorsque celle-ci est fermée.

7. Installation selon l'une quelconque des revendications précédentes, **caractérisée en ce que** les conduites de récupération de fluide et de retour au réservoir, après le passage dans lesdits équipements (2, 3), forment également au moins en partie une conduite commune.

8. Installation selon l'une quelconque des revendications précédentes, **caractérisé en ce que** lesdits équipements (2, 3) comprennent des enceintes de paliers, des réducteurs de vitesse et des générateurs-démarreurs.

9. Installation selon l'une quelconque des revendications précédentes, **caractérisée en ce qu'**au moins un desdits équipements (2, 3) nécessite un refroidissement par huile quasi constant sur toute l'enveloppe de vol.

10. Moteur aéronautique comprenant une installation d'alimentation en fluide lubrifiant et caloporteur selon l'une quelconque des revendications précédentes.
